# EUROPEAN PATENT SPECIFICATION

(11) **EP 0 431 798 B1**
(45) Date of publication and mention of the grant of the patent: **08.11.1995**
(21) Application number: 90312674.6
(22) Date of filing: 21.11.1990
(51) Int. Cl.: B31D 1/02, G09F 3/02

(54) **Method for integrated label making**
Verfahren zum Herstellen von Etiketten
Procédé de préparation des étiquettes

(30) Priority: 24.11.1989 GB 8926693
(43) Date of publication of application: 12.06.1991
(73) Proprietor: Ko-Pack/Ko-Bel Europe Limited, Orton Southgate, Peterborough PE2 0XU (GB)
(72) Inventor: Kobayashi, Junichi, Peterborough, Cambs PE2 0JS (GB)
(74) Representative: Archer, Philip Bruce

(56) References cited:
- DE-A- 2 212 995
- DE-A- 3 511 717
- GB-A- 2 209 992
- US-A- 3 575 788
- US-A- 4 253 899
- US-A- 4 585 254

## Description

This invention relates to a method and machine for integrated label making, and the products thereof. An example of the application of the method of the invention is to simple label structures in which a web of labels is assembled with a backing web suitably treated with a release material, such as silicone, whereby the label web can be readily removed from the backing web and the labels themselves applied to a product. The invention is also applicable to more complex label structures, such as those in which, for example, two label webs are assembled, one on top of the other, with a backing web below them suitably treated with a release material. Such a label will be referred to herein as a "Piggy-Back" label. Broadly speaking, certain aspects of the invention are applicable to any label structure in which a backing web coated with a release material is employed. The invention is applicable also to structures not strictly intended as labels, for example coupons and the like, in which two or more webs are assembled to produce a laminar assembly of two or more layers. The invention may apply to such a structure whether or not it is assembled from two or more webs or by a technique in which individual label-like elements are individually assembled.

In the case of simple label structures of the kind in which a continuous web of labels connected end to end is superimposed on a continuous web of backing material suitably coated with release material such as silicone, such an assembly has very limited utility. It is perfectly effective for labelling purposes in the sense that the printed matter on each label is, after application of the label to a product, properly displayed thereon. However, the label has no other function, and can display only whatever information or other material can be printed on the available area of its surface. This is somewhat limiting, and various proposals have been made for providing more information in various ways. Moreover, the web of backing material represents a source of cost inefficiency in the sense that once it has been peeled away from the label web, its job is done and it is discarded.

Proposals have been made for piggy-back labels in which a label assembly, otherwise as described in the preceding paragraph, is applied to a product, but the label assembly has two label layers, and the upper label layer can be peeled off and discarded by the user when necessary or desired. This means that, effectively, the amount of information conveyed on the label assembly can be doubled. Moreover, the product can still be properly identified by the under-label even after the upper label has been removed.

However, the piggy-back label described above is itself somewhat limited in its efficiency and economy in the sense that it requires three layers or webs of paper or plastics or textile material together with two layers of adhesive and one layer of silicone or other release material.

GB-A-2 209 992 discloses a self-adhesive label supported by a release layer. The label portion comprises a base material being at least partially opaque, an inter-layer peel ply of wax or similar material, formed on the principal surface of the base layer and an adhesive layer being at least partially transparent formed on the principal surface of the peel ply layer. In use, the label is removed from the release layer and is used to conceal sensitive information such as bank balances on postcards which are then despatched by mail. The recipient of the postcard then separates and removes the base layer and inter layer peel ply from the adhesive layer which remains adhered to the postcard and the concealed information is now visible through the transparent adhesive layer.

We have identified the fact that significant further economies and efficiencies and improvements in performance of label assemblies of this kind are desirable.

Accordingly, it is an object of the present invention to provide a method of making labels for application to a product, together with labels produced by such a method, and labels per se, offering improvements in relation to one or more of the matters discussed herein, or generally.

According to the invention there is provided a method of making labels for application to a product, products of such method, and labels per se, as defined in the accompanying claims.

In a preferrred embodiment, a method of making labels for application to a product comprises providing a label web of paper or plastics or textile material to carry the information or other matter to be displayed by the labels. Matter to be displayed on the labels is printed on the label web, and adhesive is applied thereto for the surfaces of the labels which are to adhere to the product. The label web is assembled in contact with a corresponding backing web of paper or plastics or textile material, of which the face for contact with the label web is coated with a release material, such as silicone.

The method further comprises the step of causing the backing web to be subjected, prior to assembly with the label web, to the step of coating said face of the backing web with the release material by passing the web through a release material application station. Then, the web is passed through a curing station for the release material, before proceeding onwards for assembly with the label web.

In the preferred embodiment, the release material comprises silicone and the curing station effects curing by use of ultra-violet radiation.

The station for application of the release material, or that station and another such station, applies the release material to both sides of the backing web, in one embodiment. Then the backing web is assembled with a second label web carrying printed matter and having on one face adhesive to cause the label web to adhere to a product to be labelled, and the thus-assembled product has the first and second label webs adhering to the backing web on opposite sides thereof.

In the preferred embodiment, a processing step is carried out on the backing web prior to the step of passing the backing web through the release material application station, such processing step being of a kind which could not be performed on the backing web after application of the release material. Thus, one example of such a step, is the printing of matter on one or both faces of the backing web.

The preferred embodiment also discloses a machine or apparatus for carrying out the method as identifed above, together with a label or a web of labels made by such a method.

A further preferred embodiment includes a web of labels in which the backing web is coated on both faces with a release material, but such coating is performed prior to entry or assembly of the web into the apparatus carrying out the steps of the method of the invention, and the backing web is assembled with label webs on both of its faces.

In a further preferred embodiment a label for application to a product comprises a backing layer carrying a release material on one face and a label layer carrying an adhesive on one face to secure the label to a product in due course, such face being adhered to the backing layer and being separable therefrom for application to a product. The label comprises a removable portion which can be peeled-off or otherwise removed to expose information or to display material below it. The label is characterised by the feature that the removable portion comprises a portion of the label layer, and the information or display material below that removable portion is provided on a separable portion of the backing layer, which separable portion remains adhered to the label layer when the label layer is removed from the backing label. In addition, the separable portion of the label layer at least partially overlaps with the removable portion of the backing layer, and can be removed to expose the latter so that the information or display material carried thereby becomes visible.

Also in the preferred embodiment, the separable portions of the labels are substantially aligned, one above the other, in the assembled condition of the label. Both separable portions lie wholly withinthe external periphery of the backing layer and the label layer. The separable portion of the label layer is smaller than that of the backing layer, and in the assembled condition of the label lies wholly within the periphery of the separable portion of the backing layer.

The separable portion of the label layer has the adhesive thereon to secure the label layer to a product, and such adhesive is on the surface which contacts the separable portion of the backing layer. In use, as the label layer is peeled from the backing layer from the outer periphery inwards, the peripheral band of adhesive between the two layers, which lies outwardly of the periphery of the separable portion of the label layer, promotes initial separation of the separable portion of the backing layer before the peeling action reaches the separable portion of the label layer. As a result, the separable portion of the backing layer begins to peel first and is preferentially removed.

Embodiments of the invention will now be described by way of example with reference to the accompanying drawings in which :-
Fig 1 shows, diagrammatically, a section through a simple previously proposed label consisting of a label web super-imposed on a backing web;
Fig 2 shows, in a view similar to Fig 1 a section through another previous proposal, namely a piggy-back type label;
Fig 3 shows a corresponding section through a double-sided label assembly according to the invention;
Figs 4, 5, 6 and 7 show corresponding sections through a second embodiment according to the invention illustrating stages in the removal of the label web from the backing web seem in Fig 4, and the subsequent application, seen in Fig 6 of the label web to a product, and the subsequent removal, seen in Fig 7 of a portion of the label web; and
Fig 8 shows a sectioned elevational view of a label making press.

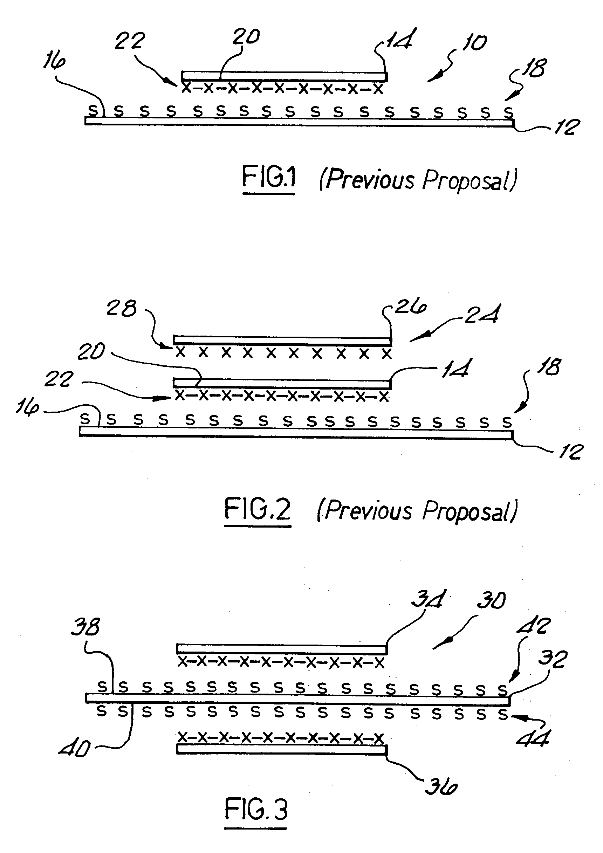

As shown in Fig 1, a previously proposed label assembly 10 comprises a backing web 12 and a label web 14.

The backing web 12 is coated on its upper face 16 with a release material 18 identified by the letters "S" in the figure, denoting that the release material is constituted by a layer of silicone. The drawing is, of course, entirely diagrammatic so far as concerns the proportions and dimensions of the label layers and the thicknesses of the layers of release material, adhesive etc.

The underside 20 of label web 14 is coated with a layer 22 of adhesive suitable for securing the labels of label web 14 to a product.

In use, the label assembly seen in Fig 1 is disassembled by peeling the label web 14 away from the backing web 12, and applying the individual labels to a product, whereupon the backing web 12 is discarded.

Fig 2 shows another previous proposal, in the form of a piggy-back label. This is otherwise constructed as in Fig 1, except as mentioned below. Therefore, the elements common with Fig 1 have been numbered accordingly. However, in the label assembly 24 of Fig 2 a secon label web 26 is mounted on label web 14 in "piggy-back" manner, and is secured thereto by a layer 28 of peelable adhesive, whereby the piggy-back labels 26 can be removed after application to a product, without damaging the lower label layer 14, so as to reveal printed matter carried thereon.

Having now described two previous proposals, a method and a product according to the present invention will now be described, making reference first to Fig 3 of the accompanying drawings.

As shown in Fig 3, a web 30 comprises an assembly of a backing web 32 and first and second label webs 34, 36 respectively. Backing web 32 is coated with release material S on its opposite faces 38, 40. In this embodiment, label webs 34, 36 are, in themselves, constructed as in the labels of Figs 1 and 2, that is to say the label web 14 shown therein. In Fig 3 the layers of release material S are identified by reference numerals 42, 44.

Turning back to consider the previous proposals of Figs 1 and 2, in these constructions the backing web 12 is coated with the layer 18 of release material S on one face only. The other face is "plain", that is to say the other face is simply untreated web material, for example paper. Webs of this kind, manufactured by conventional techniques involving stepwise curing of the release material S in suitable ovens are conventionally empolyed for the production of the label assemblies of Figs 1 and 2. Such backing webs are conventionally available for label manufacture. The webs are produced using curing ovens of a certain fixed length whereby such a length of the web can be cured at a time, followed by stagewise curing of successive lengths. In view of the time taken to effect curing, and the dimensions of the curing oven required, it has not (to the knowledge of the applicants) previously been possible to provide for curing of the release material in situ in the apparatus used for label manufacture. It has been essential to buy-in the pre-manufactured product, and to use this in the manner already described above.

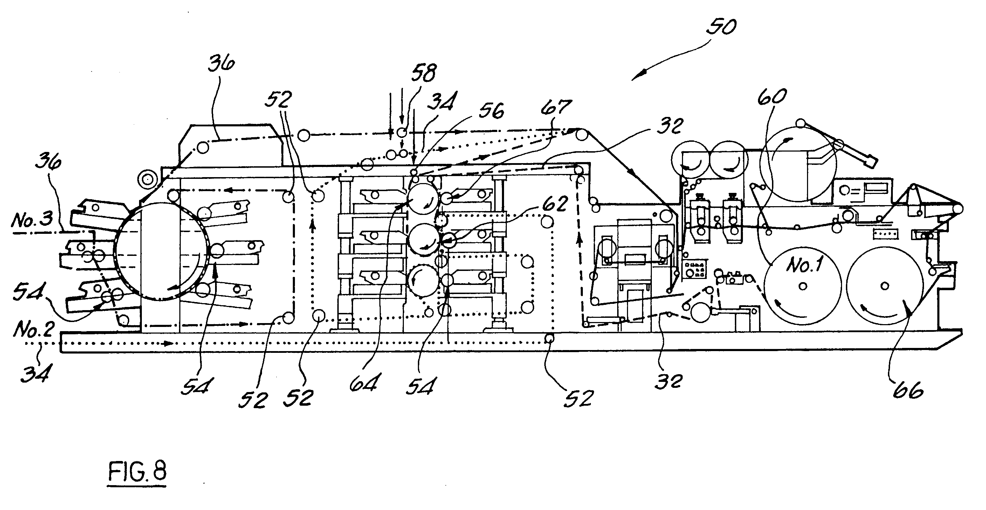

We have determine that it is possible by the method of the invention to effect application of a release material, such as silicone, within the press or apparatus used for label manufacture, or an adjacent apparatus, to apply the release material to a plain paper or plastics or textile material web, in a continuous process, and then subsequently, likewise in a continuous process, to cure the release material, such as silicone. Fig 8 of the accompanying drawings shows apparatus applicable for this purpose.

As shown in Fig 8, the three webs 32, 34 and 36 (of regular plain label stock or label face paper) are handled by the press 50, as indicated. The label webs 34 and 36 enter the press 50 at the left hand end, as seen in Fig 8 and pass around guide rollers 52 and through printing stations 54 at which the information or display matter is suitably printed on the webs before pressure-sensitive adhesive is applied, for example at stations 56 and 58. The adhesive may be a hot melt or a solvent or aqueous adhesive composition, and is applied as just one step in the single-pass operation performed by the press.

As regards backing web 32, this is fed from a drum 60 through stations 62 and 64 providing for, successively, application of release material to one side of the web followed by continuous ultra-violet curing ,of the thus-coated side of the web. Such treatment is then followed by similar treatment of the opposite side of the web by corresponding treatment stations (not shown). The double-sided web 32 is then passed for assembly with the webs 34 and 36, as shown, and the assembled web 30, comprising the backing web and the two label webs, as shown in Fig 3, is then wound onto a drum 66, as indicated.

As regards the application of the release material to the backing web 32, such application can be made by means of presently available web treatment equipment whereby the release material is applied as a uniform layer to the web 32. The composition of the release material prior to curing is based on a silicone-containing composition, but with the modification whereby it is susceptible to ultra-violet curing on a continuous basis. Such a composition is available from Ko-Pack (UK) Limited of Bakewell Road, Orton Southgate, Peterborough, PE2 OXU, UK

As regards the ultra-violet curing station, this comprises ultra-violet radiation generating apparatus adapted to apply such radiation to the relevant surface of the web whereby the uncured release material composition is rapidly cured, or at least curing is initiated, during the time while the web passes through the station. Curing may be allowed to continue and become complete after emerging from the station.

In this manner, and as illustrated in Fig 3, it is possible to produce a web, as shown at 30, in which the amount of label material available for product labelling is doubled with respect to the previous proposals, while requiring only the mere treatment of the reverse side of the backing web with release material, as described above. In this way, a very substantial increase in efficiency is secured. This improvement in efficiency and cost effectiveness could have been achieved at any time by use of a double-sided backing web manufactured by conventional equipment, if such a step had been obvious. To the best of the applicants' knowledge, no such proposal has ever been made or carried out commercially.

It will now be understood that by virtue of the provision of stations for application of release material and subsequent curing within the press 50 and prior to asembly with the label webs, the opportunity arises to perform on the backing web treatment stages such as printing which are not possible with prior art proposals in which the backing web is coated with release material and cured quite separately, usually by a third party organisation.

Thus, in the apparatus of Fig 8, it is possible to provide for printing of the backing web 32 prior to application of release material and assembly, and all the operations are carried out in a single pass of the web material through the press. Naturally, this applies to both surfaces of the backing web, or to either of them. The benefits of in-situ application and curing of release material thus provides advantages even for a backing web which, as in the prior art proposals, has release material only on one face.

The printing of the face of the backing web which is to be coated with release material is performed at any suitable printing station (for example the station 67) provided within the press 50, and such station is located upstream of the release material application station.

By printing on the paper label stock web below the release material, information is available for the user after peeling off the label material mounted on the backing material. This might well be of benefit to the user of such a web, by providing suitable instructions relating to the labelling process. Equally, such printed material on the backing web could be of use in connection with coupons, as opposed to labels, where the backing web would then form an integral part of the coupon. In such a case, the backing web might well be printed likewise on its reverse side, though that side might well not need release material if no "label" were to be applied to it.

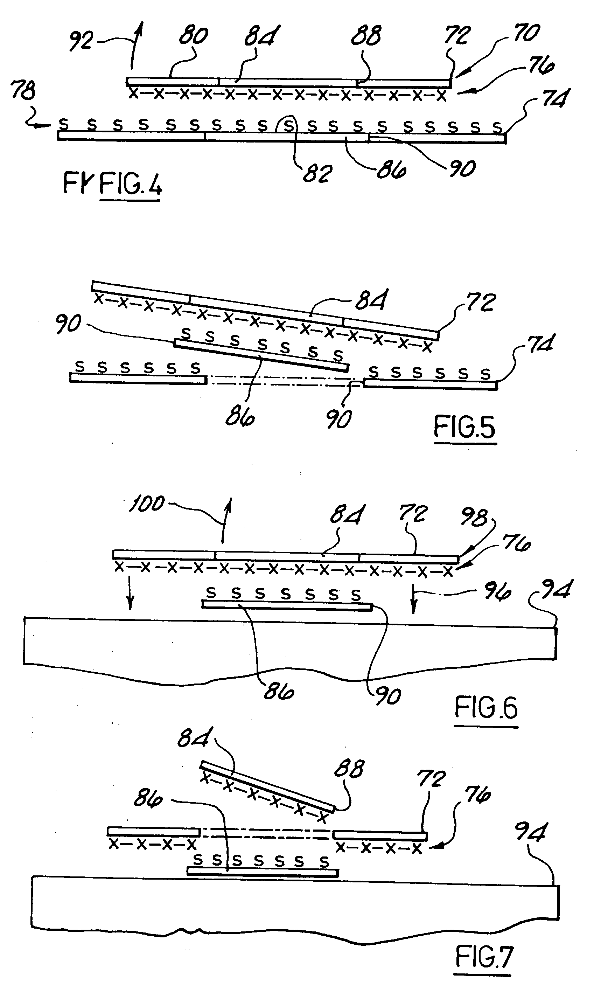

In the embodiment shown in Figs 4 to 7, there is provided a label construction in which, in a more sophisticated way, advantage is taken of the ability to print matter on the backing web, even though this is coated with a release material.

Hitherto, attempts to print matter on release-material-coated backing webs have failed due to technical printing difficulties caused by the presence of the release material itself. Infact it has proved impossible to print onto the release material surface itself. The ability to print prior to application of release material is a considerable improvement in this regard.

Turning now to Figs 4 to 7, it will be seen that in Fig 4 the label assembly 70 is constructed in a manner similar to one side of the assembly seen in Fig 3.

Thus, label assembly 70 comprises a label web 72 and a backing web 74, the label web having an adhesive layer 76 and the backing web having a layer 78 of release material S. The label web 72 has matter printed on its upper surface 80. The backing web 74 has matter printed on the surface 82 of an inner portion thereof, as described more fully below.

As shown in Figs 4 to 7, both label web 72 and backing web 74 have respective removable portions, corresponding to each label of the continuous webs, these portions 84, 86 being positioned one underneath the other, and the removable portion 84 of the label web being smaller than that of the backing web. The latter is the portion of the backing web 74 which has matter printed thereon, as described above.

The boundaries of these removable portions 84 and 86 are indicated by reference numerals 88 and 90 respectivley. In this embodiment, the boundary 88 lies wholly within the boundary 90. The shapes of these boundaries may be varied according to choice. The boundaries are produced by a die-cutting operation performed by a suitable station within the press 50.

In use, the assembly 70 is produced by the press 50 in a manner closely corresponding to that already described above in connection with the embodiment of Fig 3. When it is desired to apply the label to a product, the sequence of operations is as follows :-

First, as indicated in Fig 4 by the arrow 92, the label web 72 is peeled (starting at the outer periphery and working inwards) away from the backing web 74. The adhesive layer 76 is quite readily parted from the silicone-coated backing web, but when the peeling process reaches the periphery 90 of the removable portion 86 of the backing web, the latter comes away from the rest of the backing web, as shown in Fig 5, suitably held by the adhesive. The remainder of the peeling action has no effect on the removable portion 84 of the label web.

Then, as shown in Fig 6, the assembly of Fig 5 is applied to a product 94. Arrows 96 indicate application of the assembly to the product. The product is then marked with the label 98 of which the central portion 84 is removable as indicated by arrow 100. This can be achieved by the user's finger action. The portion 84 readily comes away from the portion 86 below it by virtue of the release material on the latter. The latter is retained not only mechanically by virtue of its location below label 98, but by virtue of the fact that it is held by a peripheral zone of the adhesive layer 76. Thus, the printed matter on portion 86 of the backing web is now exposed to view.

Interestingly, in the above embodiments there has been provided a method of making labels, and products obtainable therefrom inwhich the hitherto unobtainable provision of printed matter on a backing web coated with release material has enabled the provision of label assemblies making significant improvements in cost and materials efficiency, these including a double sided label assembly and label assembly as shown in Figs 4 to 7 in which the benefits of a "piggy-back" type label have been achieved without the need to provide three webs with attendant adhesive and other treatment stages, whereby cost efficiency is improved.

## Claims

1. A method of making labels (70) for application to a product, the method comprising :-
a) providing a label web (72) of paper, plastics or textile material to carry the information or other matter to be displayed by the label (70);
b) printing said label web (72) with matter to be displayed on the labels (70) thereof, and applying adhesive (76) to said label web (72) for the surfaces of said labels (70) which are to adhere to said product;
c) assembling said label web (72) in contact with a corresponding backing web (74) of paper, plastics or textile material, of which the face in contact with said label web (72) is coated with a release material (78) such as silicone;
d) the step of causing said backing web (74) to be subjected, prior to assembly with said label web (72), to the step of coating said face of the backing web (74) with said release material (78) by passing the backing web (74) through a release material application station (62) and then through a curing station (64) for said release material before proceeding onwards for assembly with said label web (72);
characterised by
e) carrying out a processing step on the backing web (74) within the same press as the other method steps are carried out, comprising printing at least the face of said backing layer (74) subsequently covered by release material (78) prior to the step of passing same through said application station (62).

2. A method according to claim 1 characterised in that said release material comprises silicone and said curing station (64) effects curing by use of ultra-violet radiation.

3. A method according to claim 1 or claim 2 characterised in that said application station (56) or said application station (56) and another such station applies said release material to both sides of said backing web (74).

4. A method according to claim 2 characterised in that said application station (56) or said application station (56) and another such station applies said release material (42) to both sides of said backing web (32), and the method further comprises the step of assembling said backing web (32) with a second label web (36) carrying printed matter and having on one face adhesive to cause same to adhere to a product to be labelled, said first and second label webs (34, 36) being caused to adhere to opposite sides of said backing web (32).

5. A label (70) or a web of labels (70) made by a method according to any one of claims 1 to 3.

6. A label (30) or a web of labels (30) made by a method according to claim 4.

7. A method of labelling a product comprising providing a web of labels (30) as defined in claim 4 and peeling or otherwise removing said labels (30) from both sides of said backing web (32) and applying same to said product.

## Patentansprüche

1. Verfahren zur Herstellung von Etiketten (70) zum Anbringen an einem Produkt, umfassend die folgenden Schritte:
a) Bereitstellen einer Etikettenbahn (72) aus Papier, Kunststoff oder textilem Material, die die durch das Etikett zu zeigende Information oder einen anderen zu zeigenden Inhalt tragen soll;
b) Bedrucken der Etikettenbahn (72) mit Inhalt, der auf ihren Etiketten darzustellen ist, und Aufbringen von Klebstoff (76) auf die Etikettenbahn (72) für diejenigen Flächen der Etiketten (70), die an dem Produkt haften sollen;
c) Verbinden der Etikettenbahn (72) mit einer entsprechenden Trägerbahn (74) aus Papier, Kunststoff oder textilem Material, deren sich mit der Etikettenbahn (72) in Kontakt befindende Fläche mit einem Ablösematerial (78) wie Silikon beschichtet wird;
d) Bewirken, daß die Trägerbahn (74) vor ihrer Verbindung mit der Etikettenbahn (72) dem Schritt der Beschichtung ihrer genannten Fläche mit dem Ablösematerial (78) unterzogen wird, indem die Trägerbahn (74) eine Station (62) zum Aufbringen des Ablösematerials und dann eine Station (64) zum Aushärten des Ablösematerials durchläuft, bevor sie für die Verbindung mit der Etikettenbahn (72) weiterbefördert wird;
dadurch gekennzeichnet, daß
e) die Trägerbahn (74) im Zuge der Durchführung der anderen Verfahrensschritte in derselben Presse einem Verfahrensschritt unterzogen wird, bei dem zumindest diejenige Fläche der Trägerschicht (74), die anschließend mit dem Ablösematerial beschichtet wird, vor Durchlaufen der Aufbringungsstation (62) bedruckt wird.

2. Verfahren nach Anspruch 1, dadurch gekennzeichnet, daß das Ablösematerial Silikon umfaßt und daß die Aushärtung an der Aushärtestation (64) durch den Einsatz von UV-Strahlen erfolgt.

3. Verfahren nach Anspruch 1 oder 2, dadurch gekennzeichnet, daß das Ablösematerial in der Aufbringungsstation (56) oder in der Aufbringungsstation (56) und einer weiteren derartigen Station auf beiden Seiten der Trägerbahn (74) aufgebracht wird.

4. Verfahren nach Anspruch 2, dadurch gekennzeichnet, daß das Ablösematerial (42) in der Aufbringungsstation (56) oder in der Aufbringungsstation (56) und einer weiteren derartigen Station auf beiden Seiten der Trägerbahn (32) aufgebracht wird, wobei das Verfahren den weiteren Schritt der Verbindung der Trägerbahn (32) mit einer zweiten Etikettenbahn (36) umfaßt, die einen Aufdruck trägt und auf einer Fläche einen Klebstoff aufweist, der bewirkt, daß sie an einem zu etikettierenden Produkt haftet, wobei bewirkt wird, daß die erste und die zweite Etikettenbahn (34,36) an den entgegengesetzten Seiten der Trägerbahn (32) haften.

5. Ein durch ein Verfahren gemäß einem der Ansprüche 1 bis 3 hergestelltes Etikett (70) oder eine Etikettenbahn (70).

6. Ein durch ein Verfahren gemäß Anspruch 4 hergestelltes Etikett (30) oder eine Etikettenbahn (30).

7. Verfahren zum Etikettieren eines Produkts, umfassend die Bereitstellung einer in Anspruch 4 definierten Etikettenbahn (30) und Abziehen oder anderweitiges Lösen der Etiketten (30) von beiden Seiten der Trägerbahn (32) und Anbringen derselben an dem Produkt.

## Revendications

1. Procédé de fabrication d'étiquettes (70) pour application à un objet, le procédé comprenant :
(a) la préparation d'une bande d'étiquettes (72) en papier, matière plastique ou matière textile pour porter les informations ou les autres éléments à afficher par l'étiquette (70) ;
(b) l'impression de ladite bande d'étiquettes (72) avec les éléments à afficher sur ses étiquettes (70), et l'application d'adhésif (76) à ladite bande d'étiquettes (72) sur les surfaces desdites étiquettes (70) qui doivent adhérer audit objet ;
(c) l'assemblage de ladite bande d'étiquettes (72) en contact avec une bande porteuse correspondante (74) en papier, matière plastique ou matière textile, dont la face en contact avec ladite bande d'étiquettes (72) est revêtue avec une matière anti-adhérence (78), par exemple du type silicone ;
(d) l 'amenée de ladite bande porteuse(64), avant l'assemblage avec ladite bande d'étiquettes (72), à l'étape de revêtement de ladite face de la bande porteuse (74) avec ladite matière anti-adhérence (78), par passage de la bande porteuse (74) à travers une station d'application de matière anti-adhérence (62) puis à travers une station de durcissement (64) de ladite matière anti-adhérence, avant de passer à l'étape d'assemblage avec ladite bande d'étiquettes (72) ;
caractérisé par
(e) l'exécution d'une étape de traitement sur la bande porteuse (74),dans la même presse qui sert à exécuter les autres étapes du procédé, comprenant l'impression, au moins de la face de ladite bande porteuse (74) qui sera ensuite revêtue de matière anti-adhérence (78), avant l'étape de passage de cette bande à travers ladite station d'application (62).

2. Procédé suivant la revendication 1, caractérisé en ce que ladite matière anti-adhérence comprend une silicone et ladite station de durcissement (64) effectue le durcissement au moyen d'un rayonnement ultraviolet.

3. Procédé suivant la revendication 1 ou la revendication 2, caractérisé en ce que ladite station d'application (56),ou ladite station d'application (56) et une autre station semblable, applique ladite matière anti-adhérence aux deux faces de ladite bande porteuse (74).

4. Procédé suivant la revendication 2, caractérisé en ce que ladite station d'application (56) , ou ladite station d' application (56) et une autre station semblable, applique ladite matière anti-adhérence (42) aux deux faces de ladite bande porteuse (32), et le procédé comprend en outre l'étape d'assemblage de la dite bande porteuse (32) avec une deuxième bande d'étiquettes (36) portant des éléments imprimés et ayant de l'adhésif sur une face pour permettre de la coller à un objet à étiqueter, lesdites première et deuxième bandes d'étiquettes (34,36) étant traitées de manière à adhérer aux faces opposées de ladite bande porteuse (32).

5. Etiquette (70) ou bande d'étiquettes (70), fabriquée par un procédé suivant une quelconque des revendications 1 à 3.

6. Etiquette (30) ou bande d'étiquettes (30), fabriquée par un procédé suivant la revendication 4.

7. Procédé d'étiquetage d'un objet, comprenant la préparation d'une bande d'étiquettes (30) suivant la revendication 4 et le décollement ou l'enlèvement d'une autre façon desdites étiquettes (30) à partir des deux faces de ladite bande porteuse (32) et l'application de ces étiquettes audit objet.
